# DEMANDE DE BREVET EUROPEEN

(11) **EP 1 493 686 A1**
(43) Date de publication de la demande: **05.01.2005**
(21) Numéro de dépôt: 04300383.9
(22) Date de dépôt: 16.06.2004
(51) Int. Cl.: B65D 90/12, B65G 63/00, E02D 27/01, B65D 90/00, B65D 90/24

(54) **Soubassement faisant office de berceau pour le positionnement d'un conteneur d'une benne ou similaire**

(30) Priorité: 17.06.2003 FR 0307292
(71) Demandeur: LUCAS G, 85130 La Verrie (FR)
(72) Inventeur: Richard, Philippe, 85290 Saint-Laurent-sur-Sevre (FR); Rambault, Dominique, 79700 Rorthais (FR); Lucas, Jean-Marie, 85130 La Verrie (FR)
(74) Mandataire: Michelet, Alain

(57) **Abrégé**

La présente invention a pour objet un soubassement (2) faisant office de berceau pour le positionnement d'une structure de stockage de type conteneur, d'une benne ou similaire (1).
Le soubassement (2) conforme à l'invention se caractérise par le fait qu'il comporte des rails (5) qui reposent sur le sol par l'intermédiaire de pieds (6), lesdits pieds (6) étant fixés sur lesdits rails (5) par boulonnage et étant munis de moyens d'ancrage au sol (6').
Selon une forme préférée de réalisation, le soubassement (2) comporte des pieds (6) munis de moyens pour le réglage de la hauteur et/ou du niveau des rails (5). Les pieds (6) peuvent alors être constitués - d'une structure d'embase (19), destinée à reposer sur le sol, et - d'une structure d'entretoise (32), fixée par boulonnage sur les rails (5) ; les structures d'embase (19) et/ou les structures d'entretoises (32) sont munies de plusieurs orifices (18 ; 35) qui sont alignés verticalement et qui sont agencés de façon à permettre un réglage déterminé, par boulonnage, de la hauteur desdites structures d'entretoises (32).

Le soubassement (2) peut comporter en outre deux pieds indépendants (7) disposés chacun devant l'un des rails (5), destinés à supporter l'extrémité avant de la structure de stockage.

## Description

La présente invention a pour objet un soubassement faisant office de berceau pour le positionnement d'une structure de stockage temporaire de type conteneur, benne ou similaire.

Les structures de type conteneurs ou bennes sont de plus en plus fréquemment utilisées pour le stockage temporaire de produits en tous genres et en particulier de déchets. Ces structures de stockage temporaire se présentent sous la forme d'un caisson ouvert en partie supérieure pour la réception des produits ; le caisson correspondant comporte des moyens qui permettent sa prise en charge par un véhicule de transport pour son déplacement, et qui permettent sa dépose sur un soubassement de réception aménagé au niveau de la zone de collecte et/ou de stockage temporaire des produits.
Certains types de conteneurs ou de bennes comportent un fond dont la face inférieure est plane ; dans ce cas, ils sont posés à plat sur le soubassement ou sur le châssis du véhicule récepteur. D'autres types comportent un fond équipé de rouleaux qui facilitent leur positionnement par glissement ou roulement sur la structure de réception (soubassement ou véhicule récepteur).

Un soubassement pour de tels conteneurs ou bennes, ainsi que l'abri associé, sont décrits notamment dans le document FR-2 733 490 de la Demanderesse.
Les soubassements correspondants sont constitués de deux longerons, en forme de rails, constituant le berceau support du conteneur ; ces rails, dont la face supérieure reçoit directement le conteneur mobile, sont solidarisés l'un à l'autre par des structures de traverses sous-jacentes qui sont en outre destinées à supporter une charpente sur laquelle est articulé un panneau mobile servant de couverture pour le conteneur.

La préparation de l'emplacement pour de tels abris requiert d'importants travaux, et en particulier des travaux de génie civil, notamment pour récupérer les irrégularités du terrain, et/ou pour conférer une pente au soubassement et par conséquent au conteneur. Cette pente est notamment recherchée pour favoriser les écoulements dans un collecteur, des produits liquides contenus ou retenus par les déchets (huiles, eaux polluées ...) et qui ont tendance à s'écouler dudit conteneur lors de son stockage.
De plus, ces soubassements forment des structures qui sont peu modulables en fonction des impératifs du terrain, ou en fonction de la forme et des dimensions du conteneur destiné à être associé.
D'autre part, le remplacement d'éléments de telles structures, pour la maintenance notamment, se révèle assez difficile à réaliser.

On notera qu'il existe des soubassements mis en oeuvre dans d'autres domaines techniques pour la réception de structures diverses.
En particulier, le document US-6 094 873 décrit un soubassement adapté pour recevoir une construction de type « mobil-home ». Le soubassement en question n'a rien à voir avec un soubassement de benne ou de conteneur de stockage temporaire de produits, en particulier du fait que les poutres qu'il utilise, soutenues par des pieds, n'assurent pas la réception directe de la structure rapportée. En effet, des organes transversaux supérieurs sont interposés entre les poutres de base et la construction rapportée ; ces organes transversaux ne peuvent pas être envisagés dans le cadre d'un soubassement conforme à la présente invention, puisqu'ils empêcheraient la mise en place et l'enlèvement des bennes ou des conteneurs équipés de rouleaux inférieurs de positionnement.

La présente invention vise à remédier à ces inconvénients en proposant un soubassement faisant office de berceau support pour tout type de benne ou de conteneur, dont la structure est facilement réglable en fonction de la conformation du sol, mais aussi en fonction du type de conteneur qu'il est destiné à recevoir.

Le soubassement pour benne ou conteneur, conforme à l'invention, comporte deux rails parallèles qui reposent sur le sol par l'intermédiaire de pieds, lesquels pieds sont fixés sur lesdits rails par boulonnage, et sont munis de moyens d'ancrage au sol, par exemple de type chevillage.
L'écartement des rails peut donc être facilement adapté selon le type de conteneur équipé, ce qui confère au soubassement correspondant des caractéristiques d'adaptation intéressantes et des possibilités de maintenance améliorées.

Selon une forme de réalisation particulière, les rails supports de conteneur sont munis de deux côtés latéraux parallèles, et les pieds supports de rails sont constitués d'une structure d'embase avec un socle destiné à venir reposer sur le sol, muni des moyens d'ancrage au sol. Ce socle est également muni de deux ailes verticales parallèles comportant des orifices pour leur solidarisation avec les côtés latéraux des rails.

Selon une autre disposition de l'invention, l'écartement des ailes latérales des pieds supports correspond à l'écartement des côtés latéraux des rails.

Selon encore une autre particularité, la section transversale des rails est en forme générale de C, avec une partie supérieure sur laquelle est destiné à venir reposer le conteneur ; les bordures latérales de cette partie supérieure se prolongent à l'équerre vers le bas par des côtés latéraux parallèles, eux-mêmes prolongés à l'équerre vers l'intérieur par des retours orientés l'un vers l'autre ; ces retours sont découpés sur les zones de positionnement des pieds supports pour permettre la fixation desdits pieds, au moins en partie entre les deux côtés latéraux parallèles des rails.

Selon une autre disposition particulière, améliorant encore les possibilités d'adaptation structurelle, le soubassement conforme à l'invention comporte des pieds munis de moyens pour le réglage de la hauteur et/ou du niveau des rails.

Selon une forme préférentielle de cette disposition particulière, le soubassement comporte des pieds constitués - d'une structure d'embase destinée à reposer sur le sol, ainsi que - d'une structure d'entretoise, fixée par boulonnage sur lesdits rails, et ces pieds sont munis de moyens permettant un réglage de la hauteur desdites structures d'entretoises.

Selon cette forme préférentielle de réalisation, les structures d'embases et/ou les structures d'entretoises sont munies de plusieurs orifices qui sont alignés verticalement ; plus précisément, ces orifices sont agencés de façon à permettre un réglage déterminé, par boulonnage, de la hauteur des structures d'entretoises.

Selon une forme de réalisation particulièrement intéressante, le soubassement comporte des rails munis de deux côtés latéraux parallèles, et des pieds supports constitués d'une structure d'embase comportant un socle plan destiné à venir reposer sur le sol, muni des moyens d'ancrage au sol, lequel socle plan est également muni de deux ailes verticales parallèles dont l'écartement correspond à l'écartement des côtés latéraux desdits rails. Ces ailes verticales comportent des orifices pour la fixation d'une structure d'entretoise, laquelle structure d'entretoise comporte deux faces latérales munies de plusieurs orifices alignés verticalement, lesquelles faces latérales sont adaptées pour venir se positionner contre les faces internes des ailes latérales desdits pieds, et contre les faces internes des côtés latéraux des rails, pour leur fixation par boulonnage.

Selon une forme de réalisation particulière, les structures d'entretoises ont une forme générale en U constituée d'une platine verticale prolongée latéralement par deux ailes verticales munies de rangées d'orifices de fixation.

Selon encore une disposition particulière de l'invention, le soubassement comporte deux rails constitués chacun de plusieurs tronçons mis bout à bout, et les extrémités juxtaposées de deux tronçons sont solidarisées par boulonnage sur un même pied.

Selon cette disposition particulière de l'invention, le soubassement comprend des pieds équipés d'une structure d'entretoise comportant deux faces latérales dotées de deux rangées parallèles et verticales d'orifices. Les orifices correspondants sont destinés à coopérer, par boulonnage, d'une part avec une structure d'embase munie de deux ailes latérales, dotées chacune d'une paire d'orifices de fixation, et d'autre part avec deux extrémités juxtaposées de deux tronçons de rails comprenant deux côtés latéraux, chacun doté d'un orifice de fixation au niveau desdites extrémités juxtaposées.

Selon encore une autre particularité, le soubassement comporte des pieds qui coopèrent avec les extrémités de deux tronçons juxtaposés de rails par des moyens d'articulation de type pivots.
Les systèmes de pivots correspondants se présentent avantageusement sous la forme de platines munies d'au moins deux orifices permettant leur fixation sur les rails, associés à un orifice complémentaire constituant l'orifice de pivot, pour la fixation sur les ailes latérales des pieds supports, ou sur les faces latérales des entretoises.

Encore selon une disposition particulière conforme à l'invention, le soubassement comporte deux rails munis chacun d'au moins un élément latéral amovible, en forme de lèvre, adapté pour guider le conteneur sur le rail lors de son positionnement ou de son enlèvement.

Selon une autre caractéristique, le soubassement comporte deux rails munis d'éléments amovibles formant butée avant et/ou arrière, pour un positionnement approprié du conteneur sur lesdits rails. De préférence, la position de ces éléments de butées est réglable sur la longueur des rails.

Selon encore une alternative de réalisation, le soubassement comporte des pieds complémentaires indépendants, en forme de chandelles, disposés devant les rails pour supporter l'extrémité avant du conteneur. Cette particularité permet notamment de limiter la longueur des deux rails parallèles.
De préférence, ces pieds indépendants en forme de chandelles sont chacun constitués d'une structure d'embase associée à une structure d'entretoise dont la hauteur est réglable, laquelle structure d'entretoise comporte une structure supérieure rapportée formant support pour l'extrémité avant du conteneur. Cette forme préférée de réalisation permet notamment un réglage simple de la pente appliquée au conteneur.

Selon encore une forme de réalisation particulière, le soubassement est associé à un collecteur des fluides susceptibles de s'échapper du conteneur, associé à au moins un réservoir de stockage, les fluides récupérés dans le collecteur étant vidangés par simple gravité dans ledit ou lesdits réservoirs de stockage.
Le collecteur correspondant repose avantageusement sur le sol par l'intermédiaire de pieds dont la longueur est réglable. Il peut en outre comporter un élément de corps télescopique, ce qui lui confère une longueur modulable permettant son adaptation à la largeur du conteneur associé, en particulier.

Selon une autre particularité, le soubassement comporte deux rails dont l'extrémité arrière s'étend en porte-à-faux à partir de pieds supports, la portion en porte-à-faux correspondante étant coudée pour lui conférer une certaine pente en direction du sol.

Toujours selon une autre particularité, le soubassement est associé à un abri de protection du conteneur ou de la benne qu'il supporte, lequel abri comporte une charpente sur laquelle est articulé un panneau mobile servant de couverture pour ledit conteneur.

Selon une forme de réalisation particulièrement intéressante, il est prévu des moyens de réglage de la hauteur de la charpente.

De préférence, la charpente correspondante comporte deux montants fixés au sol par l'intermédiaire de platines supports ; ces montants et/ou ces platines supports sont munis de plusieurs orifices destinés à coopérer par boulonnage, de sorte à permettre le réglage de hauteur précité.

Avantageusement, les platines supports sont chacune articulées selon un axe horizontal et perpendiculaire à l'axe d'articulation de la couverture, et en pratique perpendiculaire ou sensiblement perpendiculaire aux rails associés. Cette caractéristique permet un réglage différent de la longueur de chacun des deux montants, et permet ainsi de positionner la couverture selon l'inclinaison souhaitée épousant celle du conteneur.

Mais l'invention sera encore illustrée, sans être aucunement limitée, par la description suivante de différentes formes de réalisation de soubassements conformes à l'invention, ainsi que d'abris comportant de tels soubassements, donnés uniquement à titre indicatif, et représentés sur les dessins annexés suivants dans lesquels :
- la figure 1 est une vue générale en perspective d'un conteneur positionné sur un soubassement conforme à l'invention ;
- la figure 2 est une représentation en perspective détaillant la structure du soubassement illustré sur la figure 1 ;
- la figure 3 est une vue en coupe verticale du soubassement illustré sur la figure 2, au niveau de l'un des pieds supports de rails ;
- la figure 4 est une vue en perspective illustrant la fixation d'un pied support sur le rail ;
- la figure 5 est une coupe verticale de l'un des pieds complémentaires avant, en forme de chandelle, destiné à supporter la partie avant du conteneur, dans la structure de soubassement illustrée figure 2 ;
- la figure 6 représente une vue générale en perspective d'un soubassement conforme aux figures 1 à 5, ici équipé d'un collecteur associé à un réservoir tampon ;
- la figure 7 est une représentation générale en perspective détaillant le collecteur et son réservoir associé, illustré précédemment en relation avec la figure 6 ;
- la figure 8 est une vue générale en perspective d'un abri conforme à l'invention, équipé du soubassement conforme aux figures 1 à 7 ;
- la figure 9 représente un conteneur supporté par un soubassement selon une forme de réalisation alternative, toujours conforme à l'invention ;
- la figure 10 est une vue en perspective qui montre la structure d'un pied support muni d'une entretoise de réglage en hauteur, utilisé dans le cadre du soubassement de la figure 9 ;
- la figure 11 est une vue éclatée détaillant l'un des rails du soubassement illustré sur la figure 9 ;
- la figure 12 est une vue de côté du soubassement obtenu avec les moyens illustrés sur les figures 9 et 11 ;
- la figure 13 est une vue de détail du soubassement des figures 9, 11 et 12, illustrant le montage sur pivot des rails ;
- la figure 14 représente une vue générale, en perspective, d'une variante de réalisation d'un soubassement conforme à l'invention ;
- la figure 15 est une vue générale en perspective d'un conteneur, encore positionné sur une variante de soubassement conforme à l'invention ;
- la figure 16 est une vue de côté de la structure illustrée figure 15 ;
- la figure 17 illustre une forme de montage dérivée de la structure de soubassement illustrée figures 15 et 16.

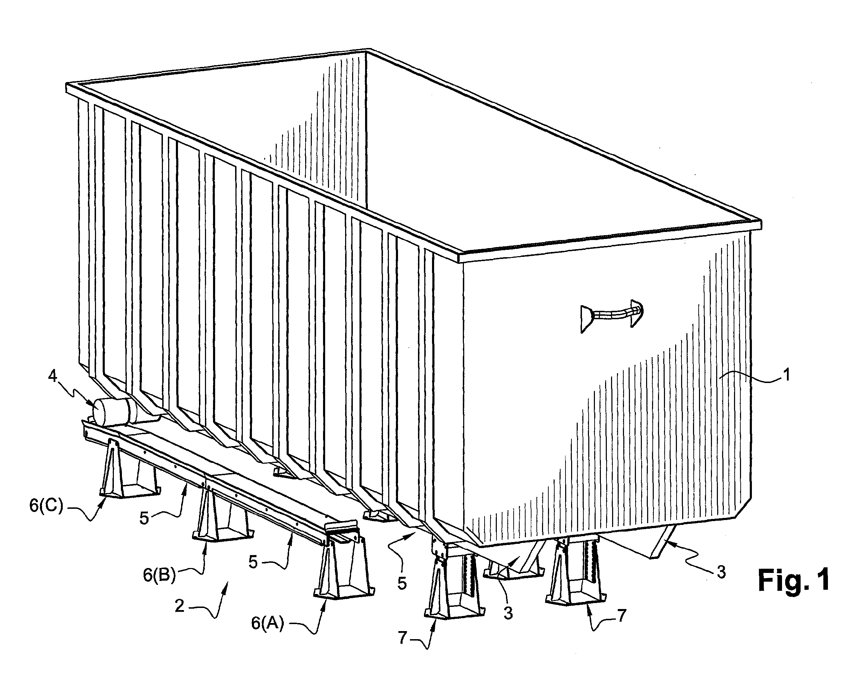

La figure 1 représente un conteneur ou une benne 1, reposant sur le sol par l'intermédiaire d'un soubassement 2 conforme à l'invention.

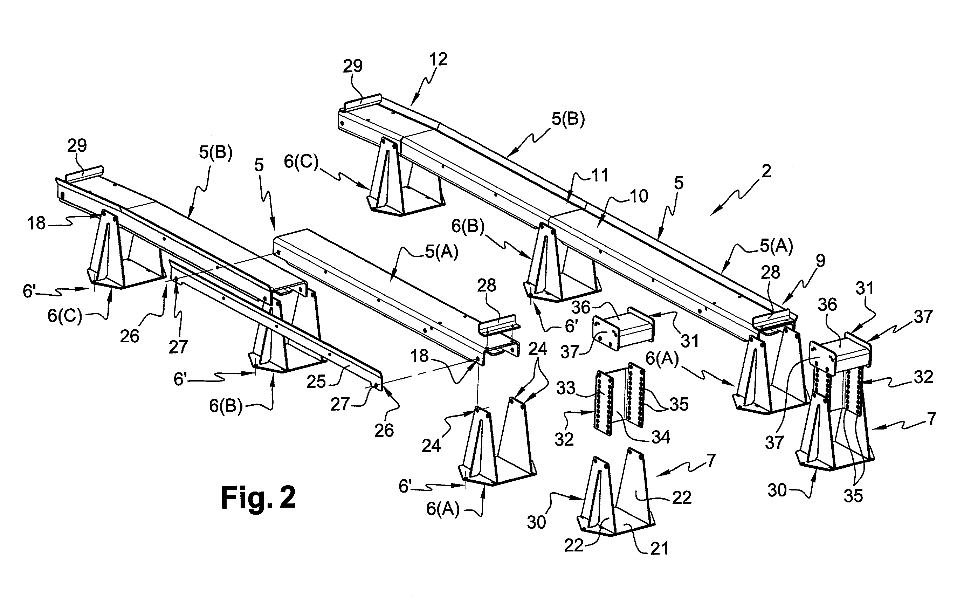

Le conteneur 1 correspondant est ici de forme générale parallélépipédique, à fond plat étanche. Ce fond plat est muni d'une paire de longerons inférieurs 3, et il comporte des rouleaux latéraux arrière 4. Ces longerons 3 et rouleaux 4 sont destinés à coopérer avec le soubassement 2 décrit plus en détail ci-dessous en relation avec les figures 2 à 5.

Le soubassement 2 (figure 2) est principalement constitué de deux rails indépendants 5, disposés parallèlement l'un à l'autre et reposant sur le sol par l'intermédiaire de pieds verticaux 6 ; ces pieds 6 sont fixés par boulonnage sur les rails 5, et ils sont ancrés au sol par tout moyen approprié 6', du type chevillage par exemple. Le soubassement 2 comporte encore deux pieds indépendants 7, en forme de chandelles, disposés devant les rails 5.

Tel qu'on peut l'observer sur la figure 1, les deux rails indépendants 5 présentent un écartement adapté pour supporter les rouleaux latéraux 4 du conteneur 1, et les pieds indépendants 7 sont chacun destinés à supporter l'extrémité avant de ce conteneur, par l'intermédiaire de l'un de ses longerons 3.

Les rails 5 précités sont ici chacun constitués de deux tronçons 5(A) et 5(B) mis bout à bout. L'un desdits tronçons 5(A), de forme rectiligne, sera dénommé pour la suite de la description « tronçon avant » ; l'autre desdits tronçons 5(B), dont l'une des extrémités est coudée, sera dénommé par la suite « tronçon arrière ».
Les tronçons 5(A) et 5(B) sont chacun délimités par une extrémité avant et arrière : les extrémités des tronçons avant 5(A) sont respectivement repérées 9 et 10, et les extrémités des tronçons arrière 5(B) sont respectivement repérées 11 et 12.

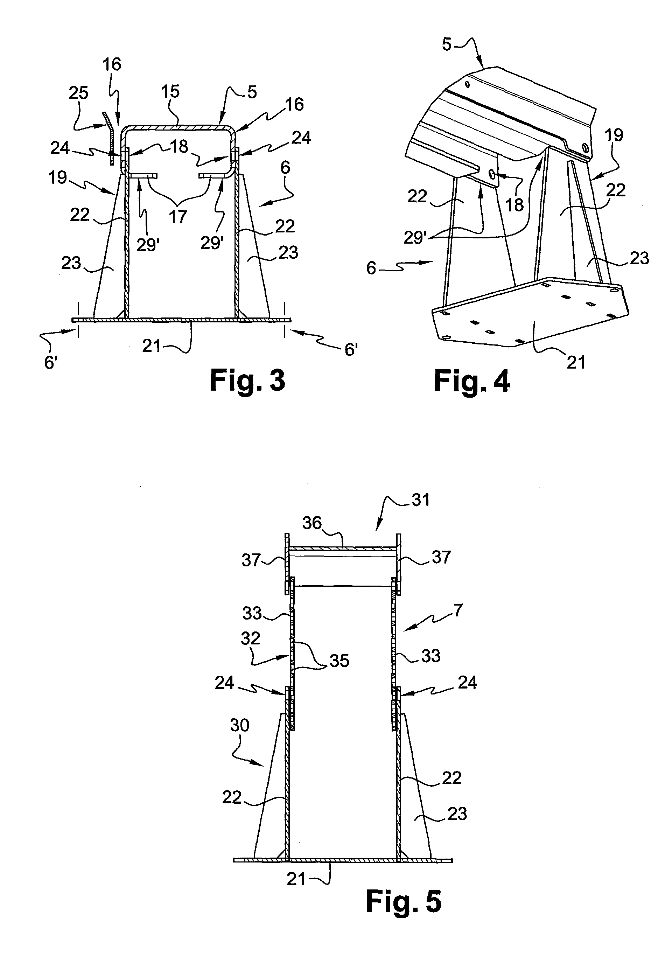

Tel qu'on peut l'observer plus en détail sur la figure 3, les tronçons de rails 5(A) et 5(B) sont réalisés en tôle pliée, présentant une section transversale en forme générale de C. Plus précisément, ils comportent une partie supérieure 15, délimitée par deux côtés latéraux 16 s'étendant à l'équerre vers le bas, munis chacun d'un retour interne 17, également à l'équerre, visant à améliorer la rigidité.

La partie supérieure 15 constitue la surface sur laquelle les rouleaux latéraux 4 sont destinés à circuler lors de la dépose du conteneur 1 sur le soubassement 2, ou lors de son enlèvement.
Les côtés latéraux 16 sont munis d'orifices 18, agencés par paires en vis-à-vis, au niveau des extrémités 9, 10, 11 et 12 des tronçons 5(A) et 5(B). Les orifices 18 correspondants sont destinés à coopérer par boulonnage avec les pieds supports 6.

Tel qu'on peut l'observer en détail sur les figures 3 et 4, les pieds supports 6 sont principalement constitués d'une structure d'embase 19 ayant une section verticale en forme générale de U. Cette structure d'embase 19, de type mécano-soudée, comporte principalement une partie inférieure horizontale 21, formant socle, dont la partie supérieure est assortie de deux ailes latérales verticales 22 qui sont rigidifiées par des organes 23 de type goussets. Les ailes latérales 22 s'étendent parallèlement l'une à l'autre ; elles sont soudées sur le socle 21. Les goussets 23 sont eux-mêmes soudés d'une part sur le socle 21 et d'autre part sur la face externe des ailes latérales 22.
Le socle horizontal 21 est destiné à reposer sur le sol. Il est fixé par boulonnage ou par des chevilles 6' dans une fondation en béton, ou similaire (non représentée).
Les ailes latérales 22 sont munies chacune à leur extrémité supérieure d'une paire d'orifices 24, en vis-à-vis, qui sont destinés à coopérer par boulonnage avec les orifices 18 des rails 5.

Lors du montage des tronçons 5(A) et 5(B) sur les pieds 6, les côtés latéraux 16 des rails 5 et les faces latérales 22 des pieds 6 sont mis en contact et positionnés de sorte à placer les orifices respectifs 18 et 24 en vis-à-vis, pour solidariser l'ensemble par boulonnage.

Tel qu'illustré sur la figure 2, le tronçon de rail 5(A) est fixé pour son extrémité avant 9 sur deux orifices 24 en vis-à-vis du pied 6(A), et son extrémité arrière 10 est fixée également sur deux orifices 24 en vis-à-vis du pied 6(B). La partie avant 11 du tronçon 5(B) est fixée sur les deux autres orifices 24 du pied 6(B), et la partie arrière 12 du tronçon 5(B) est maintenue par le pied 6(C), disposé en retrait par rapport à l'extrémité du rail, au niveau de la partie coudée dudit tronçon 5(B). L'extrémité arrière 12 du tronçon 5(B) s'étend alors en porte-à-faux, et elle est inclinée vers le bas, en particulier pour orienter ou diriger les liquides susceptibles de s'échapper de la benne et s'écoulant sur lesdites portions inclinées, comme cela sera détaillé plus loin.

On observe encore sur la figure 2 qu'un élément latéral amovible 25, en forme de lèvre de guidage, est rapporté sur le côté latéral extérieur 16 de chaque rail indépendant 5.
La lèvre 25 correspondante est munie à chacune de ses extrémités 26 d'un orifice 27 destiné à venir en vis-à-vis des orifices 18 et 24 précités des tronçons de rails 5 et des pieds supports 6, pour être fixés également par boulonnage.
Ces éléments de guidage 25 sont adaptés pour canaliser les rouleaux 4 lors de la dépose du conteneur 1 sur le soubassement 2, ou lors de son enlèvement.

Les rails 5 sont encore munis d'éléments amovibles formant butée avant 28 et butée arrière 29, ici en forme de tôles pliées à section transversale en L.
L'élément de butée arrière 29 définit la position limite arrière du conteneur 1 ; l'élément de butée avant 28 permet quant à lui d'éviter un dégagement inopportun du conteneur. Ces éléments de butées 28 et 29 peuvent être positionnés à volonté sur la longueur des rails 5, par boulonnage et au moyen de séries d'orifices adaptés aménagés dans la partie supérieure 15 des tronçons de rails.
On notera ici que la portion inclinée de l'extrémité arrière 12 des tronçons de rails 5(B) est destinée à recevoir les rouleaux latéraux 4 lorsque le conteneur est stabilisé sur le soubassement 2, ce qui contribue au calage dudit conteneur.

Comme on peut le voir sur la figure 3, l'écartement des ailes latérales 22 des structures d'embase 19 des pieds 6, correspond à l'écartement des côtés latéraux 16 des rails 5. En conséquence, pour permettre la solidarisation des pieds 6 avec les tronçons de rails 5, l'une des ailes latérales 22 est positionnée contre la face externe d'un côté latéral 16 du rail, et l'autre aile 22 est positionnée contre la face interne de l'autre côté latéral 16 de ce rail.
Pour permettre ce positionnement particulier, il est nécessaire d'aménager des découpes 29' dans les retours 17 des tronçons de rails, au niveau des zones de positionnement des pieds 6 (figures 3 et 4).
On choisira le positionnement le plus adapté des pieds 6 de manière à permettre la fixation des lèvres de guidage 25 directement sur la face externe du côté latéral 16 des tronçons de rails 5, sans être gêné par la présence des pieds 6.

Comme on l'a vu précédemment, les pieds indépendants 7 disposés devant les rails 5 sont destinés à coopérer avec la partie avant des longerons 3 du conteneur 1.
Ces pieds indépendants 7 (figures 2 et 5) forment des chandelles supports et sont de type télescopique. Pour cela, ils sont constitués d'une structure d'embase 30 et d'une structure supérieure support 31, entre lesquelles s'étend une structure d'entretoise 32 dont la hauteur est réglable.

La structure d'embase 30 est identique à la structure d'embase 19 du pied 6 décrite précédemment en relation avec les figures 2 à 4. Elle est destinée à coopérer par boulonnage avec la structure d'entretoise 32.

La structure d'entretoise 32 correspondante est réalisée en tôle pliée et présente une section transversale en U ; elle est constituée de deux faces latérales parallèles 33, aménagées de part et d'autre d'une platine verticale 34. Les faces latérales 33 sont munies chacune de deux rangées parallèles d'orifices 35, aménagées en vis-à-vis.

La structure supérieure support 31 est quant à elle rapportée par boulonnage au niveau de l'extrémité supérieure de la structure d'entretoise 32.
Cette structure support 31 comporte une partie centrale 36 réalisée en tôle pliée, dont la section transversale est en forme générale de U ; cette partie centrale 36 est assortie à chacune de ses extrémités d'une plaque rectangulaire 37, rapportée par soudage, dont la partie supérieure s'étend légèrement en saillie vers le haut, et dans laquelle est aménagée une paire d'orifices destinés à être fixés par boulonnage sur les orifices supérieurs 35 des faces latérales 33 de la structure d'entretoise 32.
On comprend bien que la structure support 31 peut être réglée en hauteur selon le niveau de fixation de l'entretoise 32 sur la structure d'embase 30.

Les opérations de montage du pied indépendant 7 consistent, tout d'abord, à positionner la structure d'entretoise 32 au sein de la structure d'embase 30, entre ses deux ailes latérales 22. Pour cela, la distance entre les deux faces latérales 33 de la structure d'entretoise 32 correspond, au jeu près, à la distance entre les deux ailes latérales 22 de la structure d'embase 30. Les rangées d'orifices 35 des faces latérales 33 permettent alors le réglage de la hauteur de la structure d'entretoise.
De la même manière, on observe que la distance entre les deux faces latérales 33 de la structure d'entretoise 32 correspond, au jeu près, à la distance entre les deux plaques rectangulaires 37 de la structure support supérieure 31.

En pratique, le montage d'un tel soubassement 2 peut consister, tout d'abord, à fixer au sol les pieds 6 selon une position adaptée pour obtenir une distance appropriée entre les rails 5 ; ces rails 5 sont ensuite rapportés par boulonnage.
Les pieds indépendants 7 sont enfin fixés au sol selon une position appropriée pour supporter les longerons 3 du conteneur, par l'intermédiaire de leur structure supérieure 31 ; la hauteur des entretoises 32 des pieds 7 est réglée pour conférer la pente désirée au conteneur supporté.

On notera ici que si le type de conteneur destiné à être supporté ne comporte pas de rouleaux latéraux arrière, on règlera le positionnement des rails 5 et celui des pieds avant 7, en fonction de l'écartement des longerons 3 dudit conteneur.

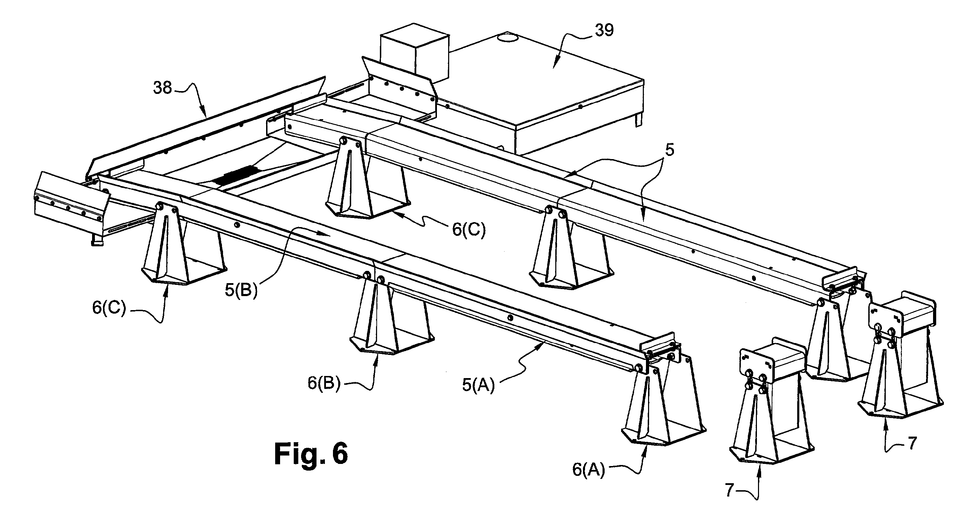

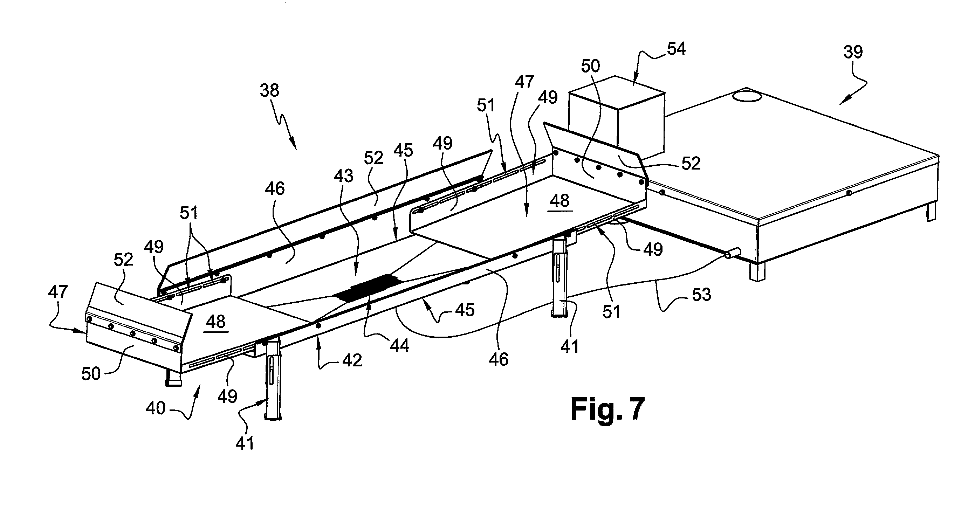

Tel qu'illustré sur les figures 6 et 7, le soubassement 2 décrit ci-dessus en relation avec les figures 1 à 5 peut être associé à un collecteur 38, adapté pour la récupération des fluides susceptibles de s'échapper par l'arrière du conteneur 1 ; ce collecteur 38 est relié à un réservoir de stockage 39.

En pratique, le collecteur 38 est positionné sous la portion des tronçons 5(B) située en porte-à-faux. Comme abordé précédemment, l'extrémité correspondante du tronçon de rail est coudée à partir des pieds arrière 6(C), et l'inclinaison vers le bas de cette portion de rail améliore la collecte et la récupération des fluides s'échappant du conteneur et s'écoulant sur les portions correspondantes des rails.

On notera ici qu'il est avantageux de ne pas découper les retours internes 17 des portions de rails 5(B) au niveau de la zone de positionnement des pieds 6(C), pour éviter d'affaiblir la rigidité desdits rails sur leur portion coudée. En conséquence, les pieds 6(C) ont de préférence une structure un peu différente de celle des pieds 6(A) et 6(B) décrits ci-dessus, en ce sens que l'écartement de leurs ailes latérales 22 est adaptée pour qu'elles viennent se positionner toutes les deux extérieurement par rapport aux côtés latéraux 16 des rails 5. L'écartement correspondant des ailes latérales 22 des pieds 6(C) peut tenir compte, le cas échant, de la présence d'une lèvre de guidage 25.

Tel qu'on peut l'observer plus en détail sur la figure 7, le collecteur 38 consiste en un élément de corps télescopique 40 monté sur le sol par l'intermédiaire de pieds 41.

Ce corps télescopique 40 comporte un élément central 42 muni d'un plancher 43 en forme de trémie ; cet élément de plancher 43 comporte une ouverture centrale 44 pour la vidange des fluides. De préférence, l'ouverture 44 est équipée d'une crépine de sorte à retenir les éventuels déchets volumineux.
L'élément de plancher 43 est prolongé sur ses bordures de côtés 45 par deux retours verticaux 46 qui s'étendent à l'équerre vers le haut, et qui sont adaptés pour coopérer avec des éléments rétractables latéraux 47.
Les éléments rétractables correspondants 47 comportent un élément de fond 48 délimité par deux parois de côtés 49 et par une paroi d'extrémité 50. Les éléments de fonds 48 sont destinés à venir se plaquer sur les extrémités latérales de l'élément de plancher 43. Les parois de côtés 49 sont munies chacune de plusieurs lumières alignées 51, de forme rectangulaire ou oblongue, destinées à coopérer par boulonnage avec les retours latéraux verticaux 46 de l'élément central 42, de sorte à permettre un mouvement de translation des éléments rétractables 47.
On comprend que cette particularité permet d'adapter à volonté la longueur du collecteur 38, en particulier selon la largeur du conteneur 1 associé, pour assurer une récupération optimale des fluides susceptibles de s'en échapper.

Pour limiter les projections de fluides, le collecteur 38 est équipé de plusieurs volets déflecteurs 52, fixés par boulonnage sur les bordures supérieures d'un des retours verticaux 46 de l'élément central 42, et sur les bordures supérieures des parois d'extrémités 50 des éléments rétractables 47.

Il est encore à noter que les pieds 41 du collecteur 38 sont de type télescopiques. Cette particularité permet d'adapter le collecteur 38 à tout type de terrain ; elle permet en outre de positionner le collecteur selon une hauteur adaptée en fonction du niveau des rails 5 et/ou du conteneur 1.

La vidange du collecteur 38 dans le réservoir de stockage 39 se réalise par simple gravité, au moyen d'une tubulure appropriée schématisée en 53.
Ce réservoir 39 est ici équipée d'une pompe de refoulement 54 permettant une vidange des fluides vers une citerne ou un réservoir complémentaire de plus grande capacité, non représenté.

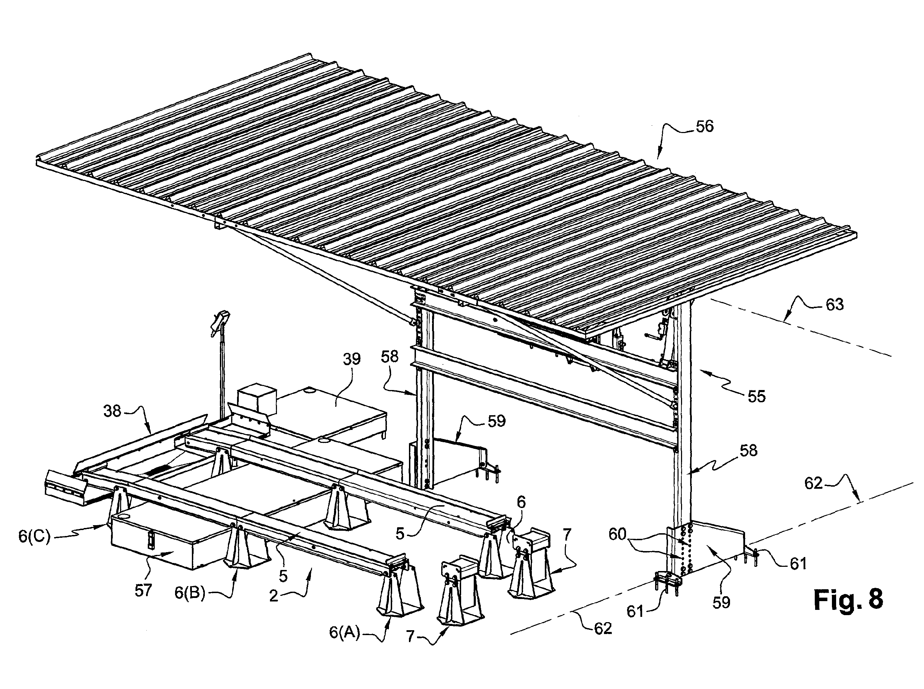

Tel que représenté sur la figure 8, le soubassement conforme à l'invention et décrit précédemment en relation avec les figures 1 à 7, peut encore être associé à une charpente 55 sur laquelle est articulé un élément de couverture 56. Ce genre de structure est particulièrement intéressant pour un stockage en extérieur du conteneur 1.

On retrouve sur cette figure 8 un soubassement 2 conforme à celui décrit précédemment en relation avec les figures 1 à 6 ; on retrouve encore le collecteur 38 et son réservoir de stockage 39, tel que décrit en relation avec les figures 6 et 7.
On remarque sur cette réalisation la présence d'un réservoir complémentaire 57, adapté pour réceptionner les fluides récupérés par le collecteur 38, via le réservoir de stockage 39. Le réservoir 57 correspondant s'étend ici sous les rails 5, entre les pieds 6(B) et 6(C), ce qui permet de limiter grandement l'encombrement lié habituellement à la présence de tels réservoirs.

Le cas échéant, le conteneur 57 peut être directement relié à l'orifice de vidange du collecteur 38, pour une récupération des fluides par simple gravité. Dans ce cas, le réservoir de stockage 39 peut être supprimé.

Le soubassement 2 est donc ici associé à une charpente 55 sur laquelle est articulé l'élément de couverture ou de toiture 56, destiné à obturer l'ouverture supérieure du conteneur. Ce genre de structure est décrit par exemple dans le document FR-2 832 989 de la demanderesse.

Cependant, cette structure se distingue de celle précitée en ce qu'elle comporte une charpente 55 munie de montants 58 qui sont fixés au sol chacun par l'intermédiaire d'une platine support particulière 59.

Plus précisément, chaque platine support 59 est munie de deux rangées parallèles de plusieurs orifices 60, de façon à permettre un réglage de la hauteur de fixation des montants 58. Il est ainsi possible d'appliquer une hauteur identique aux deux montants 58 de façon à adapter la couverture 56 à un conteneur de hauteur déterminée.
On remarque encore que les platines supports 59 sont fixées au sol par l'intermédiaire de chapes latérales 61 qui permettent leur articulation selon un axe 62 qui est parallèle au sol, et qui est perpendiculaire à l'axe d'articulation 63 de la couverture 56. L'axe d'articulation précité 62 s'étend également perpendiculairement aux rails 5 formant le soubassement 2.
On peut ainsi envisager d'appliquer une pente à la couverture 56, et cela en fonction de la pente de l'ouverture supérieure du conteneur 1. Pour cela, il suffit de régler précisément la longueur de chacun des montants 58 ; l'articulation des platines supports 59 autorise des longueurs différentes de montants, sans imposer de déformation au reste de la charpente 55 ou à la couverture 56.

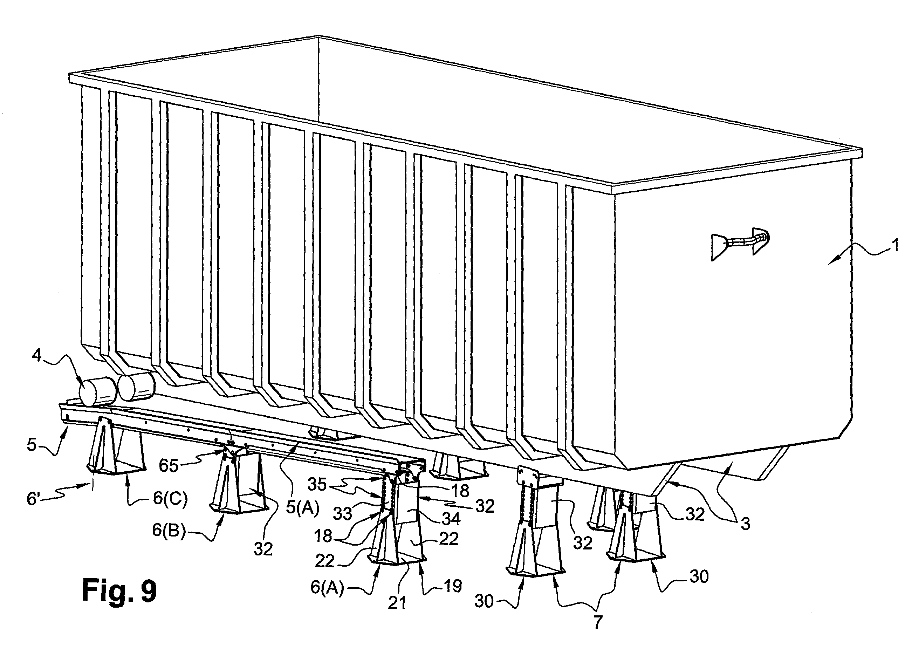

Une forme alternative d'un soubassement conforme à l'invention est représentée sur les figures 9 à 13.

On retrouve dans ce soubassement, conformément à la description ci-dessus en relation avec les figures 1 à 6, deux rails indépendants 5 reposant sur le sol par l'intermédiaire de pieds verticaux 6 rapportés par boulonnage, sur lesquels sont guidés les rouleaux latéraux 4 du conteneur 1 ; on retrouve encore les deux pieds indépendants 7, en forme de chandelles, destinés à supporter la partie avant des longerons 3 de ce même conteneur.

Cette forme alternative de soubassement se distingue au niveau de la structure des rails 5 et de certains des pieds verticaux 6. En l'espèce, les pieds 6(A) et 6(B) ont une structure similaire aux pieds indépendants 7 décrits précédemment en relation avec les figures 2 et 5, du fait qu'ils sont constitués d'une structure d'embase associée à une structure d'entretoise pour permettre un réglage de leur hauteur.
En l'occurrence, les pieds 6(A) et 6(B) sont ici équipés de telles structures d'entretoises ; les pieds 6(C) sont pour leur part identiques à ceux décrits en relation avec la figure 6.

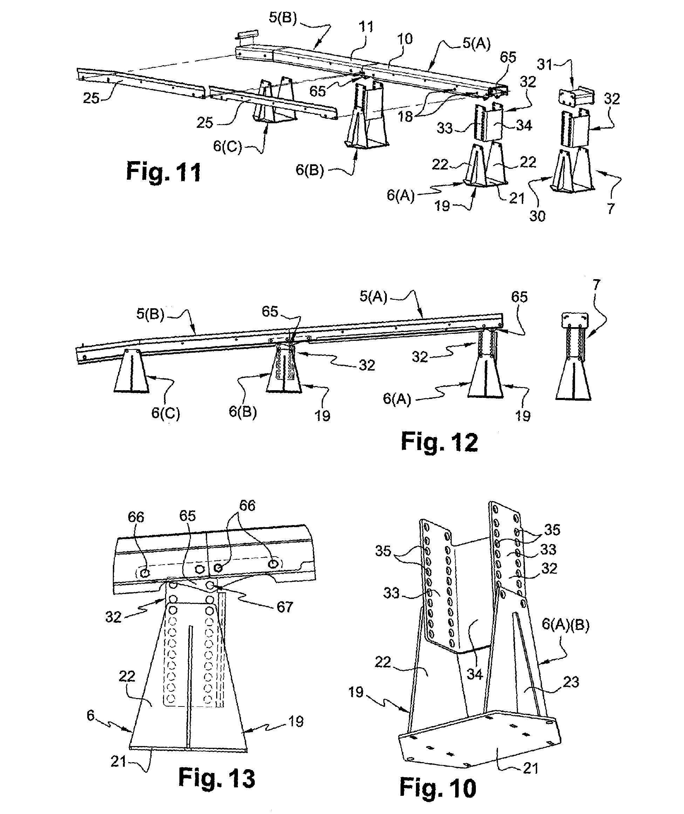

Comme détaillé sur la figure 10, les pieds 6(A) et 6(B) sont constitués d'une structure d'embase 19 en forme générale de U, coopérant avec une structure d'entretoise 32 de forme identique à celle utilisée dans le cadre des pieds indépendants 7.
La structure d'entretoise 32 comporte ainsi une platine verticale 34 dont les bordures de côtés se prolongent par deux faces latérales 33 munies de deux rangées parallèles de plusieurs orifices 35, de sorte à permettre son réglage en hauteur sur la structure d'embase 19.
La partie supérieure des faces latérales 33 coopère avec les côtés latéraux des rails 5 pour assurer le soutien de ces derniers.

La structure d'entretoise 32 coopère ici avec les rails 5 par l'intermédiaire de platines d'articulation 65, comme représenté plus en détail sur les figures 11 à 13.
Plus précisément, ces platines d'articulation 65 ont une forme générale triangulaire dont la grande base est munie de quatre orifices 66 destinés à permettre une fixation par boulonnage sur les orifices 18 aménagés au niveau des extrémités des côtés latéraux 16 des rails 5. Un autre orifice 67 aménagé au niveau du sommet inférieur des platines 65 est destiné à permettre la fixation par boulonnage des platines 66 sur les faces latérales 33 des structures d'entretoises 32, par l'intermédiaire d'un de leurs orifices supérieurs 35.
On notera que les platines d'articulation 65, au niveau des pieds 6(A), coopèrent avec des orifices 18 aménagés sur l'extrémité 9 du tronçon de rail 5(A), alors que les platines d'articulation 65, au niveau des pieds 6(B) coopèrent avec des orifices 18 de l'extrémité 10 du tronçon de rail 5(A), et avec des orifices 18 de l'extrémité 11 du tronçon de rail 5(B).

La solidarisation par boulonnage entre l'orifice 67 des platines 65 et l'un des orifices 35 des entretoises 32 forme alors un pivot qui permet de réaliser un alignement correct des tronçons de rails, si on désire obtenir une structure de soubassement en pente et/ou en cas de présence d'un sol irrégulier ou difforme.

Bien entendu, les extrémités supérieures des entretoises 32 peuvent être directement solidarisées par boulonnage avec les ailes latérales 16 des rails 5. Dans tous les cas les retours internes 17 des rails sont découpés de manière appropriée pour permettre la fixation des pieds 6, de la manière détaillée auparavant.

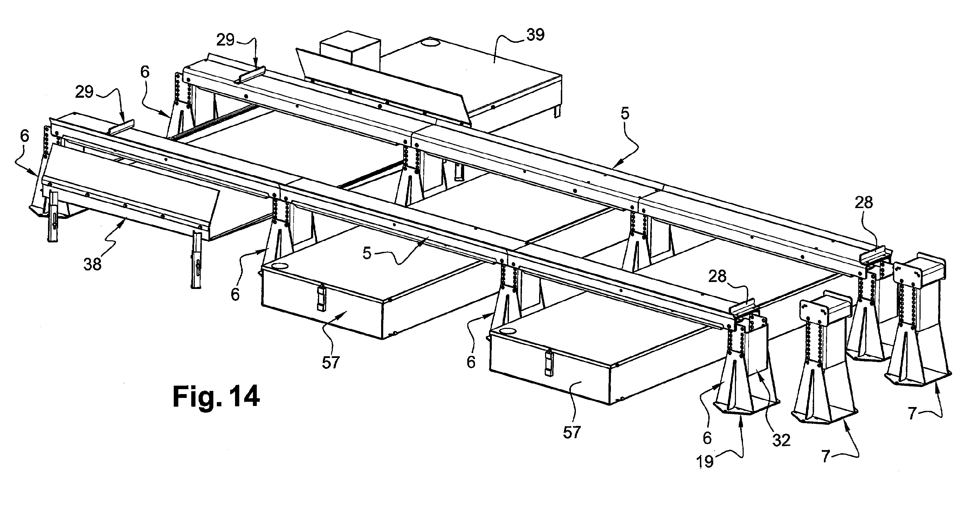

La figure 14 représente encore une autre forme de réalisation possible d'un soubassement conforme à l'invention.
On retrouve encore ici deux rails indépendants et parallèles 5 reposant sur le sol par l'intermédiaire de pieds verticaux 6 ; ces rails indépendants 5 sont associés à deux pieds indépendants 7, en forme de chandelles, disposés sur l'avant.
Chacun des pieds supports 6 est constitué d'une structure d'embase 19 coopérant par boulonnage avec une structure d'entretoise 32, elle-même coopérant par boulonnage avec les côtés latéraux des rails 5.

On observe ici que l'ensemble des pieds 6, et en particulier des entretoises 32, sont réglés à une hauteur identique de façon à ce que les deux rails 5 s'étendent selon un plan horizontal.

On remarque encore que le tronçon arrière de rail n'est pas coudé, et qu'il ne s'étend pas en porte-à-faux ; sa partie d'extrémité arrière est en l'occurrence supportée par un pied support 6. L'élément de butée arrière 29 est positionné un peu en retrait par rapport à l'extrémité correspondante du tronçon arrière du rail.

Selon cette forme de réalisation, le collecteur 38 est positionné sous les tronçons arrière de rails, entre les pieds 6 supportant lesdits tronçons. Ce collecteur 38 peut être lié au réservoir de stockage 39 et/ou aux réservoirs complémentaires 57.

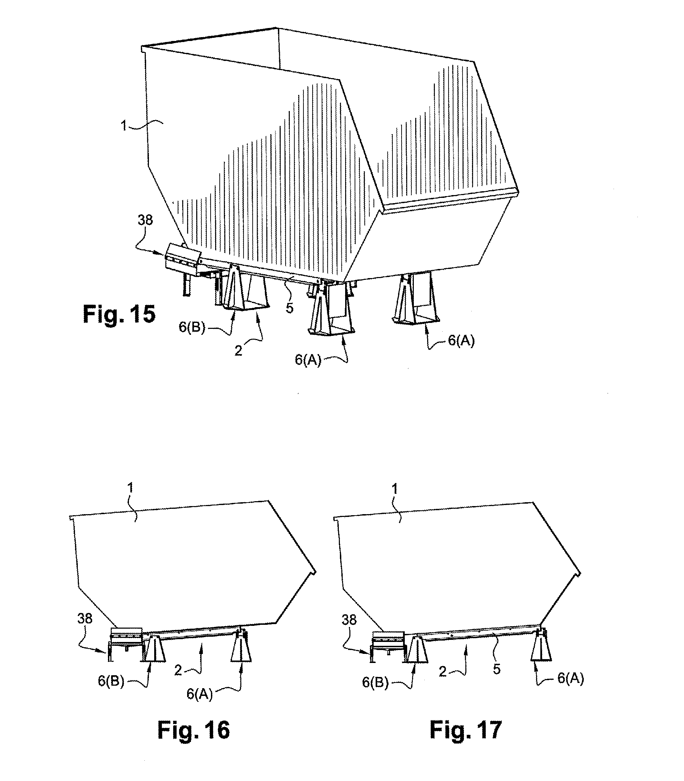

La figure 15 représente une autre forme de réalisation possible d'un soubassement 2 selon l'invention comprenant deux rails indépendants 5 disposés parallèlement et reposant chacun sur le sol par l'intermédiaire de pieds supports verticaux 6.

Dans le mode de réalisation illustré, les rails 5 sont chacun constitués d'un tronçon unique et reposent sur le sol par l'intermédiaire de deux pieds 6(A) et 6(B) ; bien entendu, il est possible ici encore de prévoir plusieurs tronçons de rails disposés bout à bout, portés par un nombre de pieds adéquat.

Le soubassement 2 correspondant est particulièrement destiné à recevoir un conteneur de type multi-benne ou benne à fond plat.

Les rails 5 correspondants ont une structure similaire à celle décrite précédemment en relation avec les figures 1 à 6, du fait qu'ils comportent une partie supérieure 15, bordée par deux côtés latéraux 16 parallèles qui sont munis de retours de renforcement 17 (non visibles).
En vue du positionnement d'un conteneur du type mentionné ci-dessus, le rail 5 n'est pas muni de lèvre latérale de guidage, ni d'éléments de butées amovibles. Le plancher de la benne repose alors entièrement sur la partie supérieure 15 des rails 5.
Selon la forme de réalisation illustrée sur les figures 15 et 16, l'extrémité arrière des tronçons de rails s'étend en porte-à-faux à partir des pieds arrière 6(B). Le plancher de la benne repose intégralement sur les rails 5 et le collecteur 38 de fluide est positionné sous l'extrémité en porte-à-faux desdits rails.
Dans une variante de réalisation illustrée sur la figure 17, les pieds 6 sont disposés aux extrémités des tronçons de rails ; le collecteur 38 est disposé derrière les pieds arrière 6(B) pour récupérer les fluides susceptibles de s'échapper de la benne dont l'extrémité du plancher est positionnée en porte-à-faux.

La structure des pieds 6 est dans tous les cas conformée de sorte à permettre le réglage d'une pente appropriée au conteneur. A cet effet, les rails 5 sont chacun supportés par deux pieds 6 similaires à ceux décrits précédemment en relation avec les figures précédentes ; les pieds avant 6(A) sont constitués de la structure d'embase 19 coopérant avec le rail 5 par l'intermédiaire de structures d'entretoises 32 ; les pieds arrière 6(B) sont quant à eux constitués uniquement d'une structure d'embase 19, fixée directement sur le rail 5 par boulonnage. Bien entendu, les pieds arrière 6(B) peuvent aussi comporter une structure d'entretoise pour permettre leur réglage en hauteur.

De manière générale, le collecteur télescopique et la charpente permettant d'appliquer une pente à l'élément de couverture, décrits en relation avec les figures 6 à 8, peuvent être utilisés avec chacune des variantes de soubassement présentées ci-dessus en relation avec les figures 9 à 13.

On notera encore qu'il peut tout-à-fait être envisagé d'associer ce collecteur particulier et/ou ladite charpente particulière, à tout type de soubassement adapté pour recevoir un conteneur ou une benne.

## Revendications

1. Soubassement faisant office de berceau pour le positionnement d'une structure de stockage temporaire de type conteneur, benne ou similaire, constituée d'un caisson muni d'une ouverture supérieure, lequel soubassement comporte deux rails parallèles (5) dont la face supérieure est destinée à supporter directement ladite structure de stockage, **caractérisé en ce que** lesdits rails (5) reposent sur le sol par l'intermédiaire de pieds (6), lesquels pieds (6) sont fixés sur lesdits rails (5) par boulonnage, et sont munis de moyens (6') d'ancrage au sol.

2. Soubassement selon la revendication 1, **caractérisé en ce qu'**il comporte des rails (5) munis de deux côtés latéraux parallèles (16), et des pieds supports (6) constitués d'une structure d'embase (19) avec un socle (21) destiné à venir reposer sur le sol, muni des moyens d'ancrage au sol (6'), lequel socle (21) est également muni de deux ailes verticales parallèles (22) comportant des orifices (24) pour leur solidarisation avec lesdits côtés latéraux (16) des rails (5).

3. Soubassement selon la revendication 2, **caractérisé en ce qu'**il comporte des pieds (6) dont l'écartement des ailes latérales (22) correspond à l'écartement des côtés latéraux (16) des rails (5).

4. Soubassement selon la revendication 3, **caractérisé en ce qu'**il comporte des rails (5) dont la section transversale est en forme générale de C, comportant une partie supérieure (15) sur laquelle est destinée à venir reposer la structure de stockage, dont les bordures latérales se prolongent à l'équerre, vers le bas, par des côtés latéraux (16) parallèles, eux-mêmes prolongés à l'équerre vers l'intérieur par des retours (17) orientés l'un vers l'autre, lesdits retours (17) étant découpés sur les zones de positionnement des pieds supports (6).

5. Soubassement selon l'une quelconque des revendications 1 à 4, **caractérisé en ce qu'**il comporte des pieds (6) munis de moyens pour le réglage de la hauteur et/ou du niveau des rails (5).

6. Soubassement selon la revendication 5, **caractérisé en ce qu'**il comporte des pieds (6) constitués - d'une structure d'embase (19) destinée à reposer sur le sol, et - d'une structure d'entretoise (32), fixée par boulonnage sur les rails (5), lesquels pieds (6) sont munis de moyens permettant un réglage de la hauteur desdites structures d'entretoises (32).

7. Soubassement selon la revendication 6, **caractérisé en ce que** les structures d'embases (19) et/ou les structures d'entretoises (32) des pieds (6) sont munies de plusieurs orifices (24 ; 35) qui sont alignés verticalement et qui sont agencés de façon à permettre un réglage déterminé, par boulonnage, de la hauteur desdites structures d'entretoises (32).

8. Soubassement selon la revendication 7, **caractérisé en ce qu'**il comporte des rails (5) munis de deux côtés latéraux parallèles (16), et des pieds supports (6) constitués d'une structure d'embase (19) comportant un socle (21) destiné à venir reposer sur le sol, muni des moyens d'ancrage au sol (6'), lequel socle (21) est également muni de deux ailes verticales parallèles (22) dont l'écartement correspond à l'écartement des côtés latéraux (16) desdits rails (5), lesquelles ailes (22) comportent des orifices (24) pour la fixation d'une structure d'entretoise (32), laquelle structure d'entretoise (32) comporte deux faces latérales (33) munies de plusieurs orifices (35) alignés verticalement, lesquelles faces latérales (33) sont adaptées pour venir se positionner contre les faces internes des ailes latérales (22) desdits pieds (6), et contre les faces internes des côtés latéraux (16) des rails (5), pour leur fixation par boulonnage.

9. Soubassement selon l'une quelconque des revendications 6 à 8, **caractérisé en ce qu'**il comporte des structures d'entretoises (32) en forme générale de U, constituées d'une platine verticale (34), prolongée latéralement par deux ailes verticales (33) munies de rangées d'orifices de fixation (35).

10. Soubassement selon l'une quelconque des revendications 1 à 9, **caractérisé en ce qu'**il comporte deux rails (5) constitués chacun de plusieurs tronçons mis bout à bout, les extrémités juxtaposées de deux tronçons étant solidarisées par boulonnage sur un même pied support (6).

11. Soubassement selon la revendication 10, **caractérisé en ce qu'**il comprend des pieds (6) équipés d'une structure d'entretoise (32) comportant deux faces latérales (33) dotées de deux rangées parallèles verticales d'orifices (35), lesquels orifices (35) sont destinés à coopérer, par boulonnage, d'une part avec une structure d'embase (19) munie de deux ailes latérales (22), dotées chacune d'une paire d'orifices de fixation (24), et d'autre part avec deux extrémités juxtaposées de deux tronçons de rails (5) comprenant deux côtés latéraux (16) dotés chacun d'au moins un orifice de fixation (18) au niveau desdites extrémités juxtaposées.

12. Soubassement selon l'une quelconque des revendications 10 ou 11, **caractérisé en ce qu'**il comporte des pieds (6) coopérant avec les extrémités de deux tronçons juxtaposés de rails (5) par des moyens d'articulation (65) de type pivots.

13. Soubassement selon la revendication 12, **caractérisé en ce qu'**il comporte des structures de pivots (65) en forme générale de platines munies d'au moins deux orifices (66) permettant leur fixation par boulonnage sur les rails (5), et d'un orifice complémentaire (67), constituant le pivot proprement dit, pour leur fixation par boulonnage sur les ailes latérales (22) des pieds (6) ou sur les faces latérales (33) des entretoises (32).

14. Soubassement selon l'une quelconque des revendications 1 à 13, **caractérisé en ce qu'**il comporte deux rails (5) munis chacun d'au moins un élément latéral amovible (25) en forme de lèvre, adapté pour guider la structure de stockage lors de son positionnement ou lors de son enlèvement.

15. Soubassement selon l'une quelconque des revendications 1 à 14, **caractérisé en ce qu'**il comporte deux rails (5) munis d'éléments amovibles formant butée avant (28) et/ou arrière (29) pour la structure de stockage, dont la position est réglable sur la longueur desdits rails (5).

16. Soubassement selon l'une quelconque des revendications 1 à 15, **caractérisé en ce qu'**il comporte, en outre, deux pieds indépendants (7) en forme de chandelles, disposés devant les rails (5), qui sont destinés à coopérer directement avec l'extrémité avant de la structure de stockage.

17. Soubassement selon la revendication 16, **caractérisé en ce que** les pieds indépendants (7) en forme de chandelles sont chacun constitués d'une structure d'embase (30) et d'une structure d'entretoise (32) dont la hauteur est réglable, lesquelles structures d'entretoises (32) comportent une structure supérieure rapportée (31), formant support pour l'extrémité avant de la structure de stockage.

18. Soubassement selon l'une quelconque des revendications 1 à 17, **caractérisé en ce qu'**il comporte, en outre, un collecteur (38) pour les fluides susceptibles de s'échapper de la structure de stockage, associé à au moins un réservoir de stockage (39, 57), les fluides récupérés dans le collecteur (38) étant vidangés par simple gravité dans ledit ou lesdits réservoirs (39, 57).

19. Soubassement selon la revendication 18, **caractérisé en ce qu'**il comporte un collecteur (38) reposant sur le sol par l'intermédiaire de pieds (41) dont la hauteur est réglable.

20. Soubassement selon l'une quelconque des revendications 18 ou 19, **caractérisé en ce qu'**il comporte un collecteur (38) muni d'un élément de corps télescopique (40), pour lui conférer une longueur modulable, en particulier en fonction de la largeur de la structure de stockage associée.

21. Soubassement selon l'une quelconque des revendications 1 à 20, **caractérisé en ce qu'**il comporte deux rails (5) dont l'extrémité arrière s'étend en porte-à-faux à partir de pieds supports (6), la portion en porte-à-faux correspondante étant coudée pour lui conférer une certaine pente en direction du sol.

22. Soubassement selon l'une quelconque des revendications 1 à 21, **caractérisé en ce qu'**il comporte, en outre un abri destiné à protéger la structure de stockage qu'il supporte, lequel abri comporte - une charpente (55) sur laquelle est articulé un panneau mobile (56) servant de couverture.

23. Soubassement selon la revendication 22, **caractérisé en ce qu'**il comporte des moyens de réglage de la hauteur de la charpente (55).

24. Soubassement selon la revendication 23, **caractérisé en ce qu'**il comporte une charpente (55) munie de deux montants (58) fixés au sol par l'intermédiaire de platines supports (59), lesquels montants (58) et/ou lesquelles platines supports (59) sont munis de plusieurs orifices (60) destinés à coopérer par boulonnage, de sorte à permettre le réglage en hauteur de ladite charpente (55).

25. Soubassement selon la revendication 24, **caractérisé en ce qu'**il comporte des platines supports (59) qui sont chacune articulées selon un axe (62) horizontal et perpendiculaire aux rails (5), de façon à permettre un réglage différent de la longueur de chacun des deux montants (58) et ainsi positionner la couverture (56) selon l'inclinaison souhaitée épousant celle de la structure de stockage.
